# EUROPEAN PATENT APPLICATION

(11) **EP 0 764 573 A1**
(43) Date of publication of application: **26.03.1997**
(21) Application number: 95923542.5
(22) Date of filing: 28.06.1995
(51) Int. Cl.: B62D 55/28

(54) **RUBBER PAD**

(30) Priority: 30.06.1994 JP 184223/94; 31.10.1994 JP 304155/94; 28.12.1994 JP 341027/94
(71) Applicant: FUKUYAMA GOMU KOGYO KABUSHIKI KAISHA, Fukuyama-shi, Hiroshima-ken 720 (JP)
(72) Inventor: KATOH, Yusaku, Fukuyama-shi Hiroshima-ken 720 (JP); ODA, Satoru, Fukuyama-shi Hiroshima-ken 720-02 (JP); NORITOU, Tatsuya, Ibara-shi Okayama-ken 715 (JP); OZAKI, Hirotaka, Kasaoka-shi Okayama-ken 714 (JP)
(74) Representative: Blumbach, Kramer & Partner
(86) International application number: JP9501294
(87) International publication number: WO9600676

(57) **Abstract**

A rubber pad to be attached to a metal crawler provided on a mobile construction machine. This rubber pad (3) includes two pad members (4, 4') comprising rubber lugs (4a, 4a') which is shorter than 1/2 of a shoe plate formed out of a rubber material in the lengthwise direction thereof, and core metals (6, 6') buried in non-ground-surface-contacting side portions of the rubber lugs and provided at one end portions thereof with hooks (6a, 6a') engageable with end portions of the shoe plate (1) and at the other end portions thereof with connecting parts (6b, 6b') having elongated bores (6h, 6h'). The pad members (4, 4') are placed on the shoe plate so that the pad members are opposed to each other via the connecting parts, and a wedge type metal member (5b) is inserted in the elongated bores, the pad members and shoe plate being then joined together by a bolt (5). Thus, the pad members are detachably fixed to the shoe plate.

## Description

### Field of the Art

The present invention relates to a rubber pad to be attached to a metal crawler provided on a mobile construction machine or a vehicle for civil engineering work.

### Prior Arts and Themes Thereof

Since previously, mobile construction machines (referred to hereinafter as "construction machines"), which mainly engage in work on non-leveled ground, have been provided with iron crawlers. However in recent years, construction machines have come to be used frequently in work in urban areas and on paved road surfaces, and the damaging of paved road surfaces by the iron crawlers have become a problem.

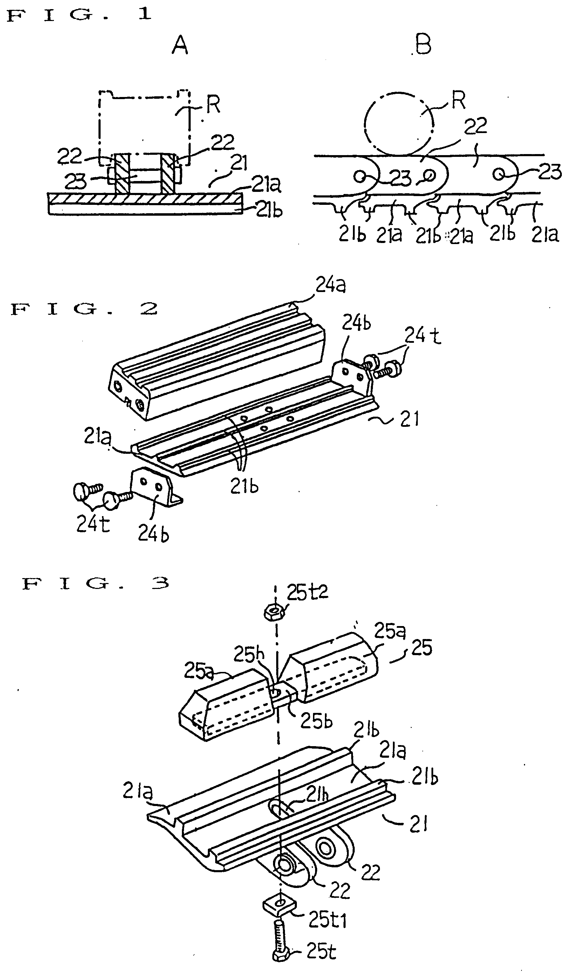

Figs. 1A and B illustrate an example of a conventional iron crawler with A being the cross section in the width direction and B being a side view. In the Figures, 21 is a crawler shoe, 21a is a shoe plate, 21b is an iron lug, 22 is a truck link, 23 is link pin, and R is a revolving wheel.

There are iron crawlers of the abovementioned type in which a rubber pad is detachably fixed to the ground-surface-contacting side of shoe plate 21a for the purpose of protecting the road surface. For example, in laid-open Japanese utility model publication No. Hei-3 24485 is disclosed an iron crawler in which a rubber pad body 24a, of a square-column-like form, is set against the ground-surface-contacting side of shoe plate 21a and fastened by means of bolts 24t upon attachment of brackets 24b at both ends as shown in Fig. 2.

However, with the above arrangement of Fig. 2, since brackets 24b are positioned at the ends of rubber pad body 24a, rubber pad body 24a can become detached when bracket 24b breaks upon coming in contact with a nearby building, etc. during the travel of the vehicle. This disadvantage can be a problem in work at a construction site with many obstacles.

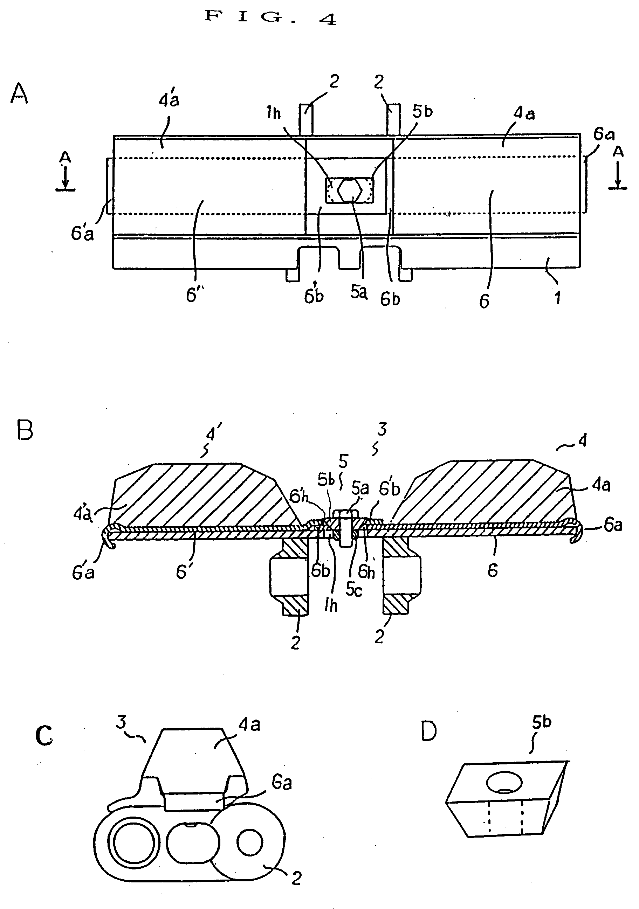

The present applicant has thus proposed in laid-open Japanese patent publication No. Hei-6 115457 a rubber pad that can be attached favorably by making use of the soil and sand ejection hole that is provided at the center of shoe plate 21a of the iron crawler. Fig. 3 illustrates this rubber pad, and here, a rubber pad 25, having a core metal 25b embedded in the non-ground-surface-contacting faces of the right and left rubber pad bodies 25a formed from rubber material, is fitted between iron lugs 21b, provided at the ground-surface-contacting surface of a shoe plate 21a, and fastened by means of a patch 25t1, a nut 25t2, and a bolt 25t, passed through soil and sand ejection hole 21h and bolt hole 25h of core metal 25b.

Although this arrangement makes contributions to solving the problem of the prior art, since the rubber pad is attached to the shoe plate at only one location, the load concentrates on the bolt. The arrangement is thus poor in durability and also makes part of the work of attaching the rubber pad awkward to perform.

The present invention has been made in view of the above problems and the object thereof is to present a rubber pad, which can be readily attached to and detached from the shoe plate but will not become detached undesirably while the vehicle is traveling, to thereby enable iron crawler to be used both at urban sites and on non-leveled ground.

### Disclosure of the Invention

In order to achieve the above object, the present applicant has made the first, second, and third inventions concerning a rubber pad, which shall be described in that order below.

### a. The First Invention

A rubber pad, to be attached to the ground-surface-contacting face of an iron shoe plate having a hole for ejection of soil and sand at substantially the center thereof, is comprised of two pad members, comprising rubber lugs, each of which is formed from rubber material and has a length that is shorter than half the length of the shoe plate, and core metals, which are embedded in the non-ground-surface-contacting sides of the rubber lugs and each of which is provided at one end portion thereof with a hook engageable with the end portion of the shoe plate and at the other end portion thereof with a connecting part having an elongated bore. The pad members are detachably fixed to the shoe plate by being set opposite each other at the connecting parts and joined by a bolt member upon insertion of a wedge type metal member in the elongated bores.

Here, a washer of a substantially elliptical shape that can be inserted in the soil and sand ejection hole of the shoe plate can be used as the bolt member, and the rubber pad can thereby be fixed to the shoe plate by making use of the soil and sand ejection hole.

For the core metal, a flat core metal, provided at one end thereof with a semicircular hook, which latches onto the end portion of the shoe plate, and at the other end thereof with a connecting part having an elongated bore, can be used, and at least a part of the core metal body can be formed as a corrugated bellows. Also, a step of an M-like shape, a continuous series of stepped grooves spaced by a suitable interval, or a protrusion of a U-like shape may be formed at the connecting part of the core metal or a latching arm can be formed by bending the end portion of the connecting part of the core metal in an L-like shape and this latching arm can be inserted into the soil and sand ejection hole from the ground-surface-contacting side of the shoe plate and latched onto the non-ground-surface-contacting face of the shoe plate.

Since the rubber pad by this invention has an arrangement wherein two pad members are fastened with a bolt member, that uses a wedge type metal member, and by making use of the soil and sand ejection hole at substantially the center of the shoe plate, the wedge type metal member is gradually inserted into the elongated bores of both core metals as the bolt is tightened and the right and left core metals are thereby slid to the center so that the core metal hooks are latched onto the end portions of the shoe plate. The rubber pad can thus be fastened readily. Also, since the semi-circular hooks latch onto the end portions of the shoe plate, the shoe plate will have no protruding parts at its end portions and therefore the rubber pad will not break or fall off upon contact with an obstacle during travel.

The rubber pad, which is arranged to be fastened by the use of the wedge type metal member and the elliptical washer, uses the soil and sand ejection hole to cause the washer to engage with the non-ground-surface-contacting side of the shoe plate and thus to serve as a stopper for preventing the detachment of the bolt as well as for fixing the core metals to the shoe plate. Thus by the tightening of the central bolt member, the rubber pad is latched onto the ends of the shoe plate by means of the core metal hooks and is fastened to the center of the shoe plate by the bolt member to thereby be firmly and readily attached to the shoe plate at three points.

Furthermore, by forming the core metal to have the form of a corrugated bellows, the core metal itself is provided with the ability to elongate when the bolt is tightened upon insertion of the wedge type metal member. This improves the durability of the core metal by preventing the concentration of force on the hooks and also enables the core metal to accommodate for differences in the size of the shoe plate.

Also by forming a step of an M-like shape, a continuous series of stepped grooves spaced by a suitable interval, or a protrusion of a U-like shape at the connecting part of the core metal, the shifting of the core metal and the concentration of load on the bolt member that connects the right and left core metals can be prevented to bring about improvements in durability.

### b. The Second Invention

With this invention, a rubber pad, to be attached to the ground-surface-contacting face of an iron shoe plate having a hole for ejection of soil and sand at substantially the center thereof, is comprised of a core metal, having a length that is substantially equal to the length of the shoe plate and is provided at one end portion thereof with a hook engageable with the end portion of the shoe plate and at the other end portion thereof with an elongated bore, and another core metal, having the same dimensions as the abovementioned core metal and provided at one end portion and the other end portion thereof with a hook and an elongated bore as well as with protruding arms of a fixed length which protrude towards the non-ground-surface-contacting side of the periphery of the elongated bore. Rubber is adhered onto the ground-surface-contacting sides of the former and latter core metals, the former and latter core metals are set opposite each other at the locations of the elongated bores with the former core metal being set above the latter core metal and are connected by a bolt and nut upon insertion of a wedge type metal member from above the overlapped elongated bores, and the connecting parts are detachably attached to the shoe plate by making use of the hole for soil and sand ejection of the shoe plate.

The wedge type metal member of the bolt member has a flanged, truncated pyramidal shape with a bolt hole being bored from the upper to lower face thereof. The nut has a T-like cross section, is comprised of a nut body, with an elliptical shape that is substantially the same as the shape of the mud ejection hole, and a circular head, which is smaller than the nut body, and has a corner-like stopper formed on said head. Also, the length of protrusion of the protruding arm is substantially equal to the thickness of the shoe plate.

Since the rubber pad by this invention has an arrangement wherein two pad members are fastened with a bolt member, that uses a wedge type metal member and an elliptical nut, and by making use of the soil and sand ejection hole at substantially the center of the shoe plate, the nut engages with the shoe plate to serve as a stopper for preventing the detachment of the bolt and, as the bolt is tightened, the wedge type metal member is gradually inserted into the elongated bores of both core metals and the right and left core metals are thereby slid to the center so that the core metal hooks are latched onto the end portions of the shoe plate. By tightening the central bolt member further, the rubber pad is latched onto the ends of the shoe plate by means of the core metal hooks and is fastened to the center of the shoe plate by the bolt member to thereby be firmly and readily attached to the shoe plate at three points.

Since the semicircular hooks latch onto the ends of the shoe plate in the condition where the rubber pad is attached, there will be no parts, such as bolts, etc., that protrude from the end portions of the shoe plate. Thus the rubber pad will not break or fall off due to contact with an obstacle during travel.

Also, since the nut with a T-like cross section will be inserted and positioned between the protruding arms upon attachment of the rubber pad to the shoe plate, the nut is readily inserted into the mud ejection hole of the shoe plate.

### c. The Third Invention

With this invention, a rubber pad, to be attached to the ground-surface-contacting face of an iron shoe plate having a hole for ejection of soil and sand at substantially the center thereof, is comprised of right and left core metals, each of which has a length that is substantially equal to the length of the shoe plate and is provided at one end portion thereof with a hook engageable with the end portion of the shoe plate and at the other end portion thereof with an elongated bore. Rubber is adhered onto the ground-surface-contacting sides of the core metals, the right and left core metals are set opposite each other at the elongated bores and connected by a bolt and nut upon insertion of a metal fastening member from above the overlapped elongated bores, and the connecting parts are detachably attached to the shoe plate by making use of the soil and sand ejection hole of the shoe plate.

The abovementioned metal fastening member can be a bent iron plate, which has a bolt hole bored at the center thereof and which deflects to be flat in form when the bolt is tightened.

Also, the tip portion of the elongated bore of at least one of either the left or right core metal can be bent to form a protrusion. Stepped grooves of a wave-like form can also be formed at the elongated bore of at least one of either the left or right core metal and fastening can be performed by using a gear-shaped metal fastening member which engages with the wave-like stepped grooves.

Since the rubber pad by this invention has an arrangement wherein two pad members are fastened with a bolt and nut and making use of a metal fastening member and the soil and sand ejection hole at substantially the center of the shoe plate, the metal fastening member slides the right and left core metals to the center as the bolt is tightened so that the core metal hooks are latched securely and firmly onto the end portions of the shoe plate.

Also, since both the metal fastening member made by bending an iron plate and the gear-shaped metal fastening member can be fastened securely with little force, the rubber pad can be easily attached by anybody, and since the metal fastening member is inserted in the elongated bores of the core metals upon completion of fastening and thus does not protrude at the ground-surface-contacting side, it will not become detached or broken upon contact with an obstacle on the road surface during travel.

Furthermore, since the semicircular hooks latch onto the ends of the shoe plate in the condition where the rubber pad is attached, there will be no parts, such as bolts, etc., that protrude from the end portions of the shoe plate. Thus the rubber pad will not break or fall off due to contact with an obstacle during travel.

### d. Effects of the Invention

As has been described above, the present invention can be attached readily to a metal crawler provided on a mobile construction machine or a vehicle for civil engineering work and will not become detached undesirably during the travel of the vehicle. The present invention thus makes the metal crawler safe to use both in urban areas and on unleveled land and is furthermore excellent in terms of repair costs and other economic effects since it enables just the damaged portions to be replaced.

### BRIEF DESCRIPTION OF THE DRAWINGS

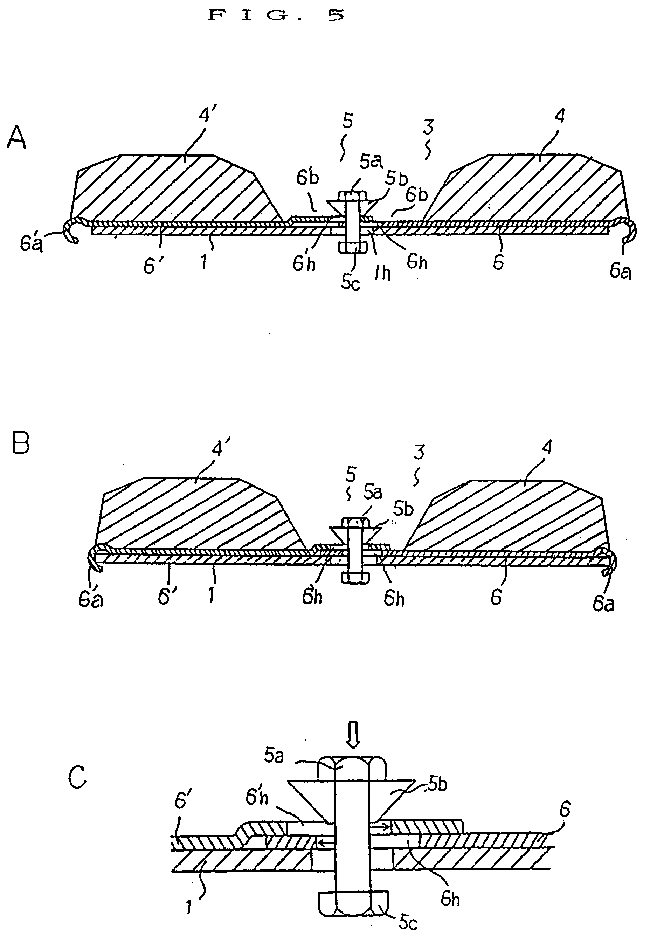

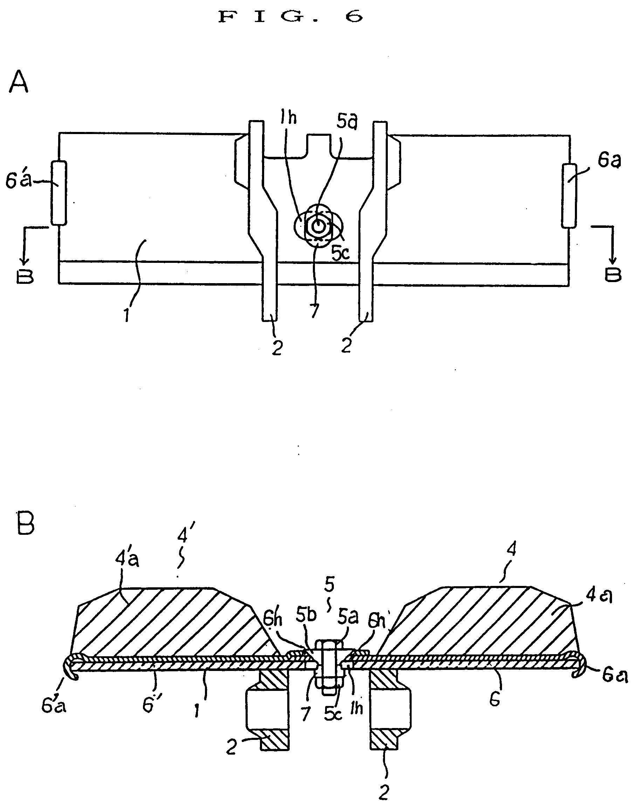

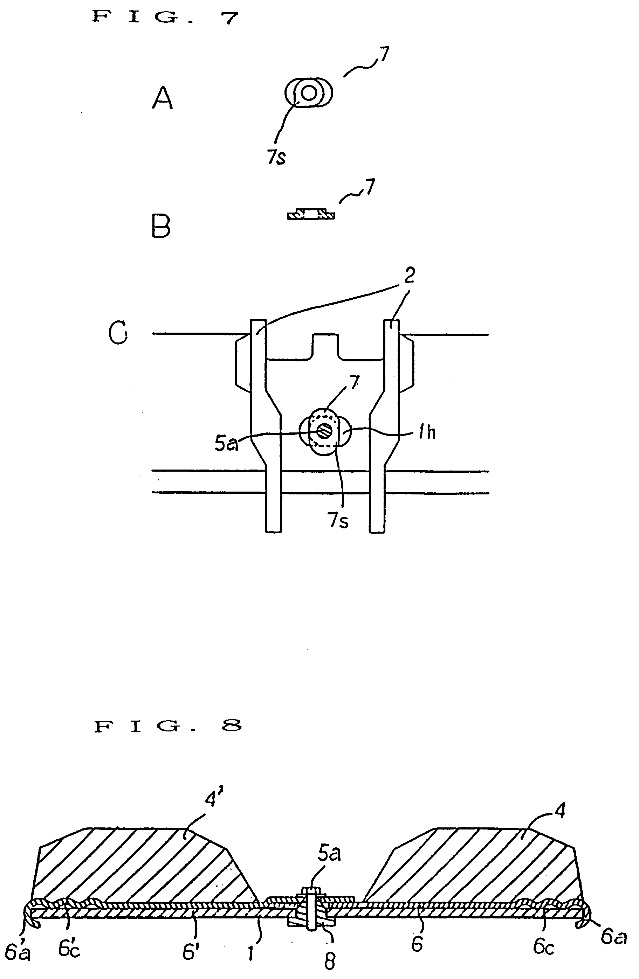

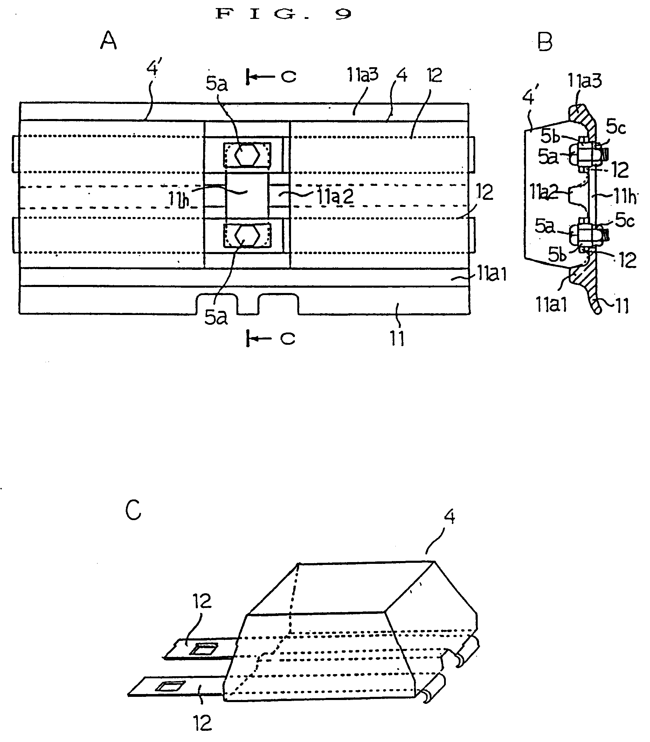

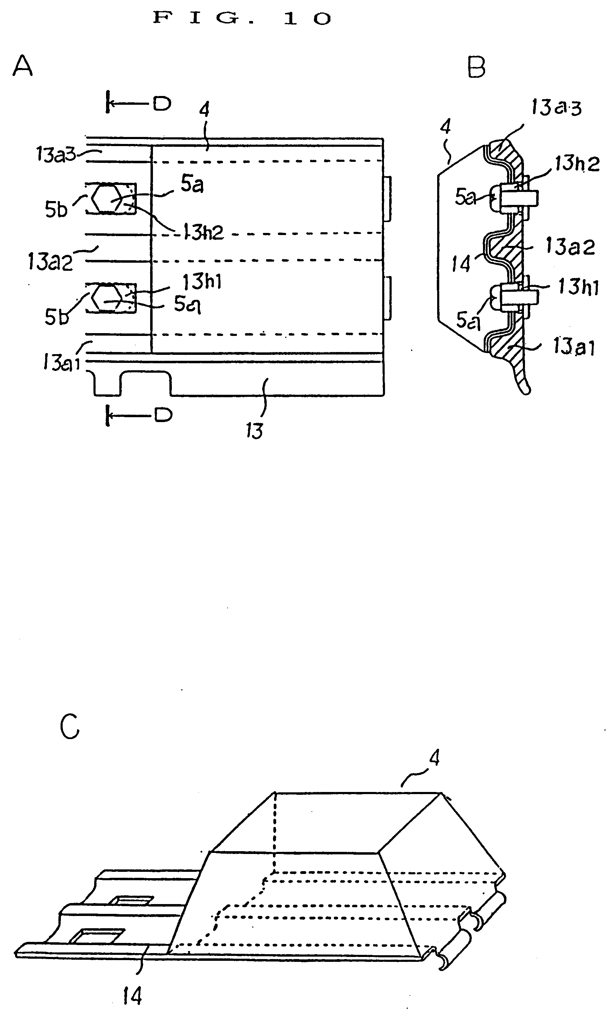

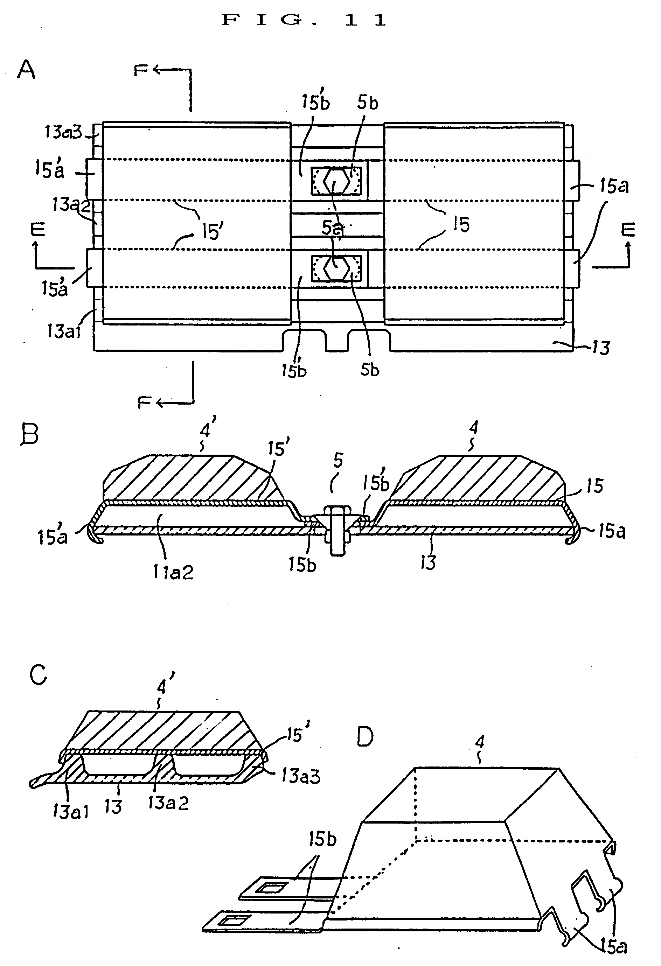

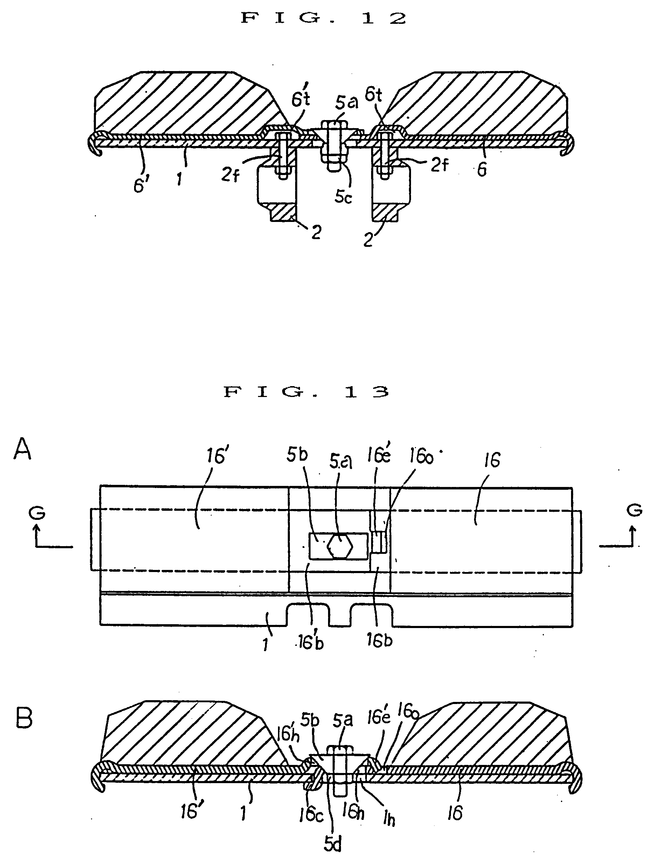

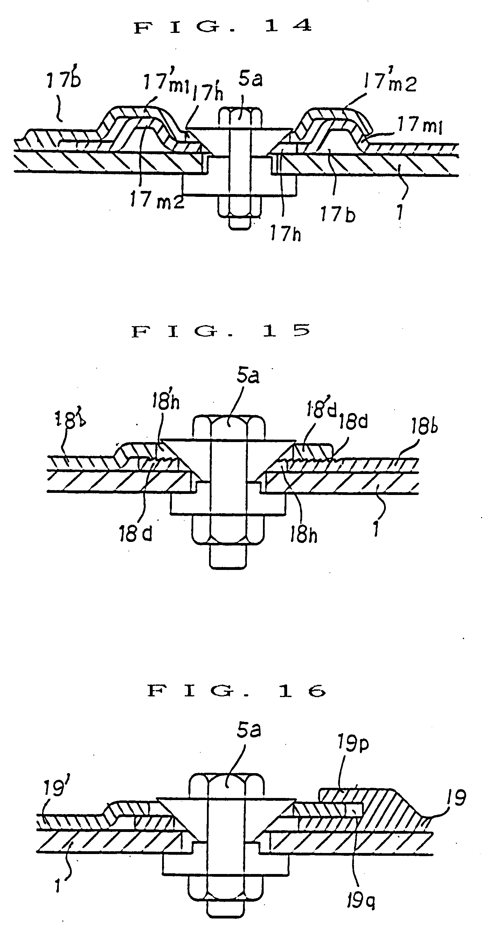

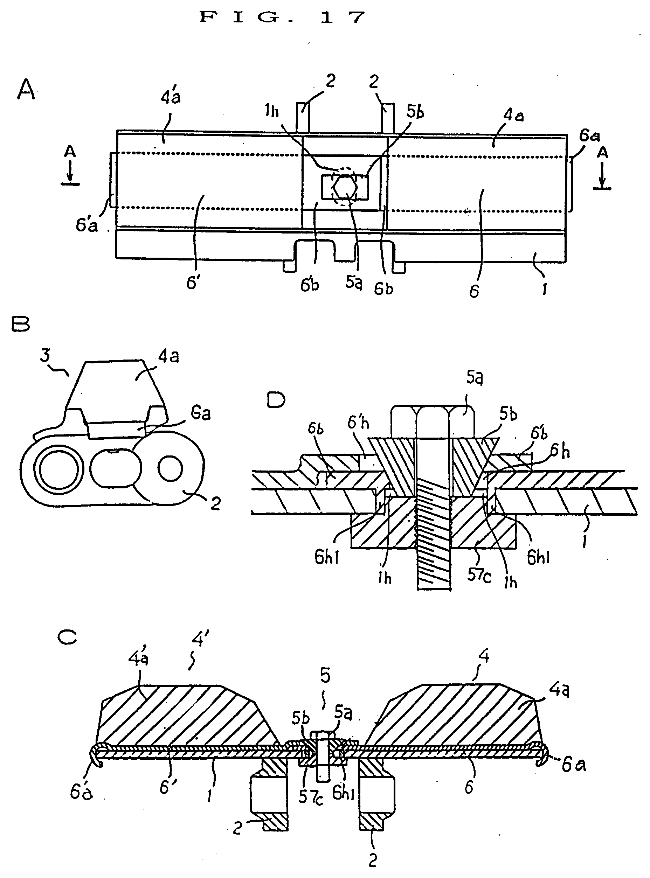

Fig. 1 illustrates an example of a prior-art iron crawler with A being a cross section and B being a side view. Fig. 2 is a perspective view of a prior-art rubber pad. Fig. 3 is a perspective view of rubber pad proposed earlier by the present inventor. Fig. 4 shows an embodiment of the rubber pad of the first invention with A being a plan view, B being a cross section along line A-A of A, C being a side view, and D being a perspective view of the wedge type metal member. Fig. 5 illustrates the method by which the rubber pad of the same invention is attached to a shoe plate with A and B being cross sections at the same position as Fig. 4B, and C being a partially enlarged view of B. Fig. 6 shows another embodiment of the rubber pad by the same invention with A being a bottom view and B being a cross section along line B-B of A. Fig. 7 shows the washer with A being a plan view, B being a cross section, and C being a diagram that illustrates the method of use. Fig. 8 is a cross section at the same position as Fig. 4B of yet another embodiment of the rubber pad by the same invention. Fig. 9 shows an embodiment of a rubber pad to be attached to a shoe plate of a different shape with A being a plan view, B being a cross section along line C-C of A, and C being a perspective view of the pad member. Fig. 10 shows an embodiment of a rubber pad to be attached to another shoe plate with A being a plan view, B being a cross section along line D-D of A, and C being a perspective view of the pad member. Fig. 11 shows an embodiment of a rubber pad to be attached to yet another shoe plate with A being a plan view, B being a cross section along line E-E of A, C being a cross section along line F-F of A, and D being a perspective view of the pad member. Fig. 12 is a cross section at the same position as Fig. 4B which shows the rubber pad when it is attached to a shoe plate to which a truck link is bolted. Fig. 13 shows a modified example of the connection part of the core metal of the rubber pad by the same invention with A being a plan view and B being a cross section along line G-G of A. Fig. 14 is an enlarged cross section of another modified example of the connection part of the core metal of the rubber pad by the same invention. Fig. 15 is an enlarged cross section of yet another modified example of the connection part of the core metal of the rubber pad by the same invention. Fig. 16 is an enlarged cross section of still another modified example of the connection part of the core metal of the rubber pad by the same invention.

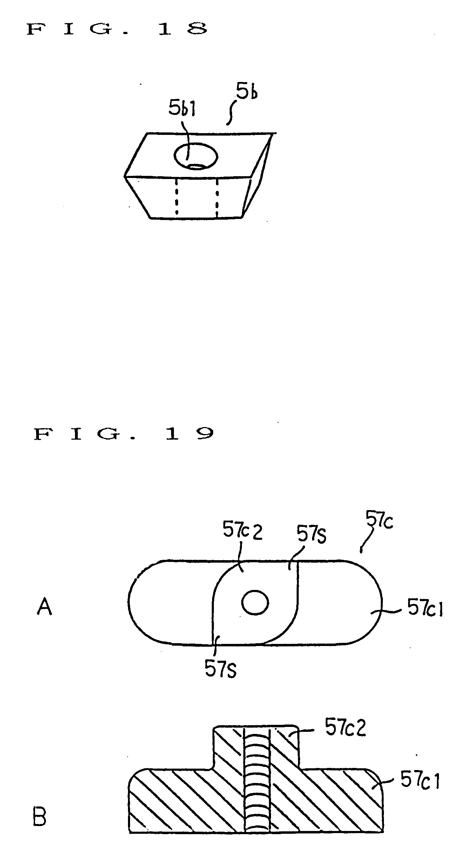

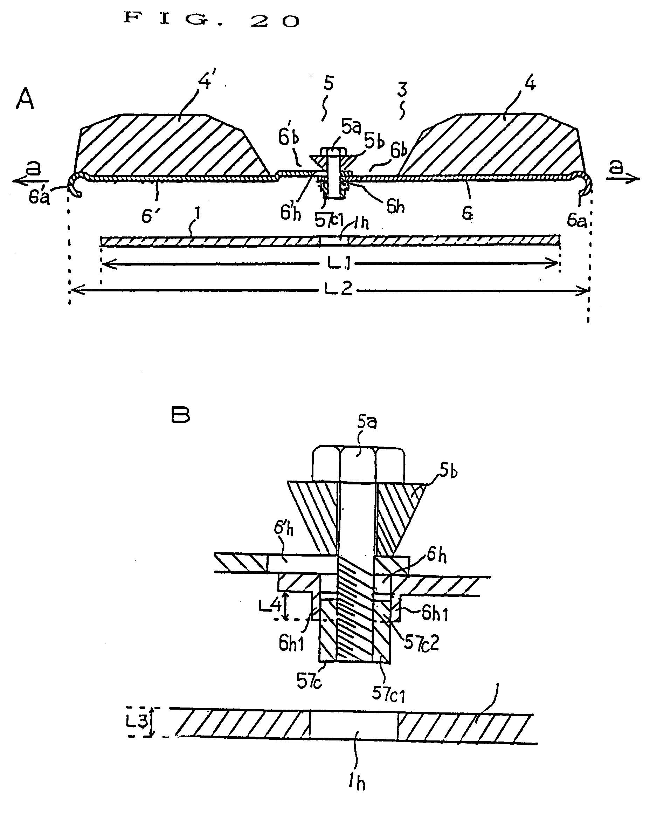

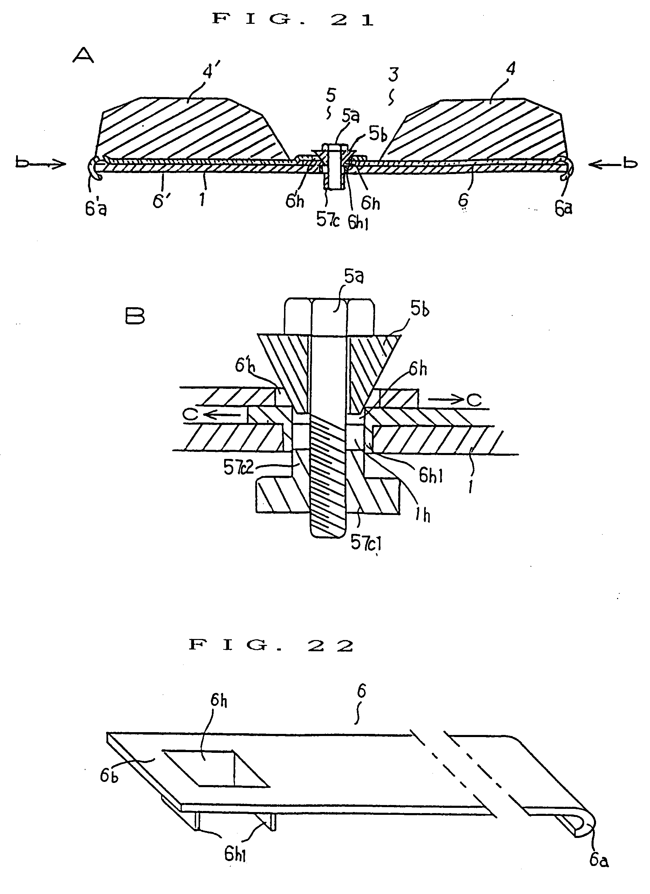

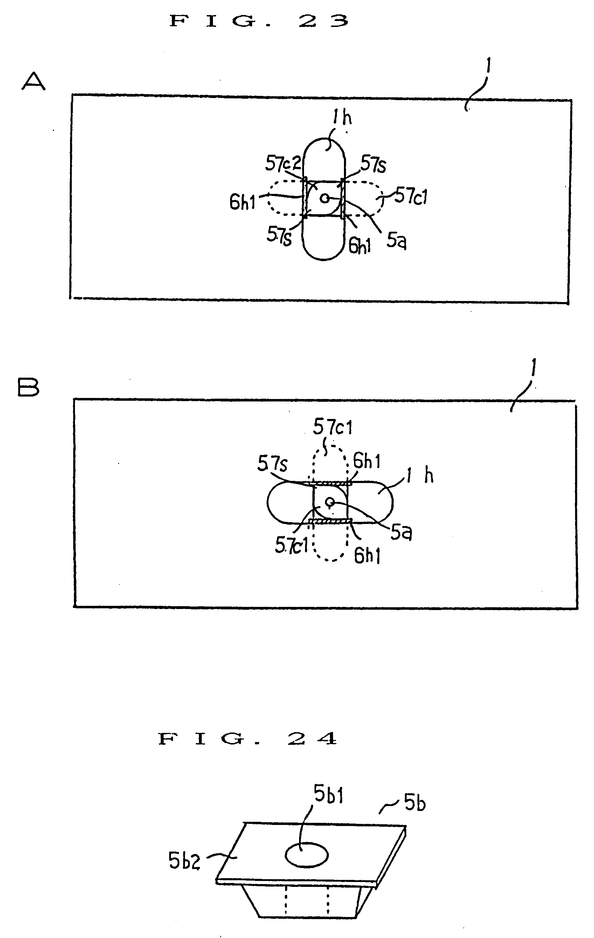

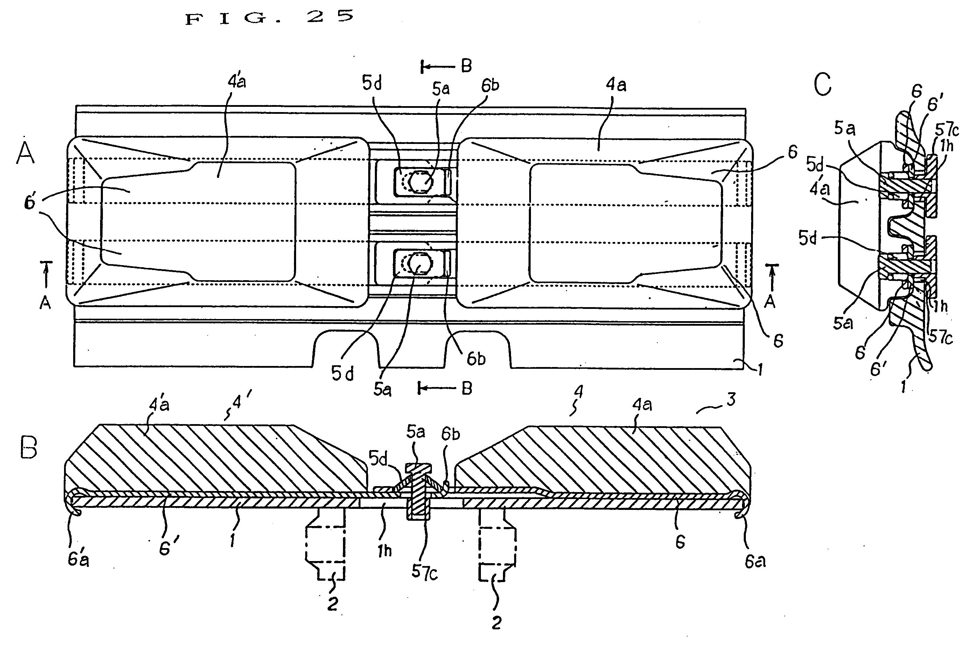

Fig. 17 shows an embodiment of a rubber pad by the second invention with A being a plan view, B being a side view, C being a cross section along line A-A of A, and D being an enlarged view of the core metal connection part shown in C. Fig. 18 is a perspective view of the wedge type metal member. Fig. 19 shows the nut with A being a plan view and B being a side view. Fig. 20 illustrates the method by which the rubber pad by the same invention is attached to a shoe plate with A being an overall cross section of the condition prior to attachment and B being a partial view of the same. Fig. 21 illustrates the method by which the rubber pad by the same invention is attached to a shoe plate with A being an overall cross section of the condition after attachment and B being a partial view of the same. Fig. 22 is a perspective view of the core metal with the protruding arm protruding therefrom. Fig. 23 is a plan view which illustrates the mud ejection hole portion. Fig. 24 is a perspective view of another embodiment of the wedge type metal member.

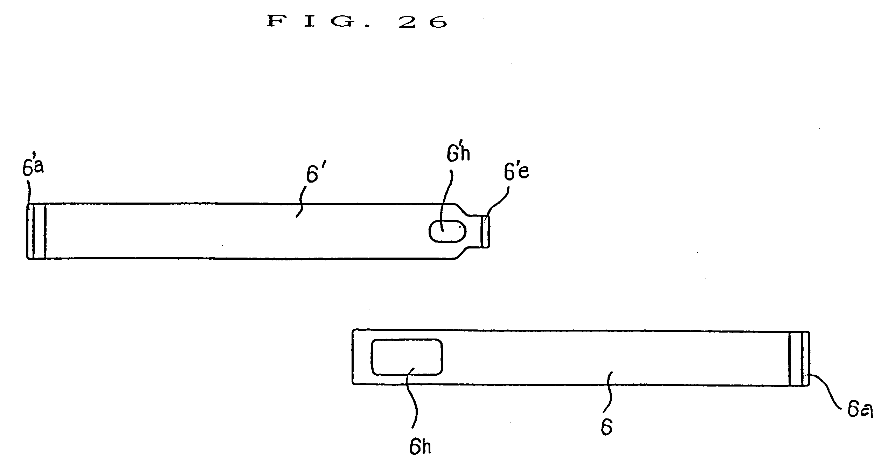

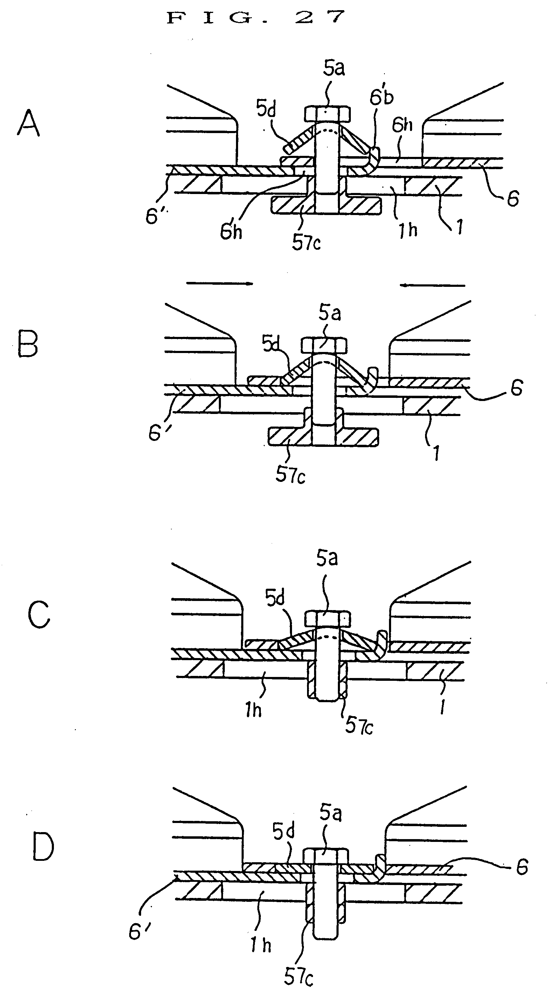

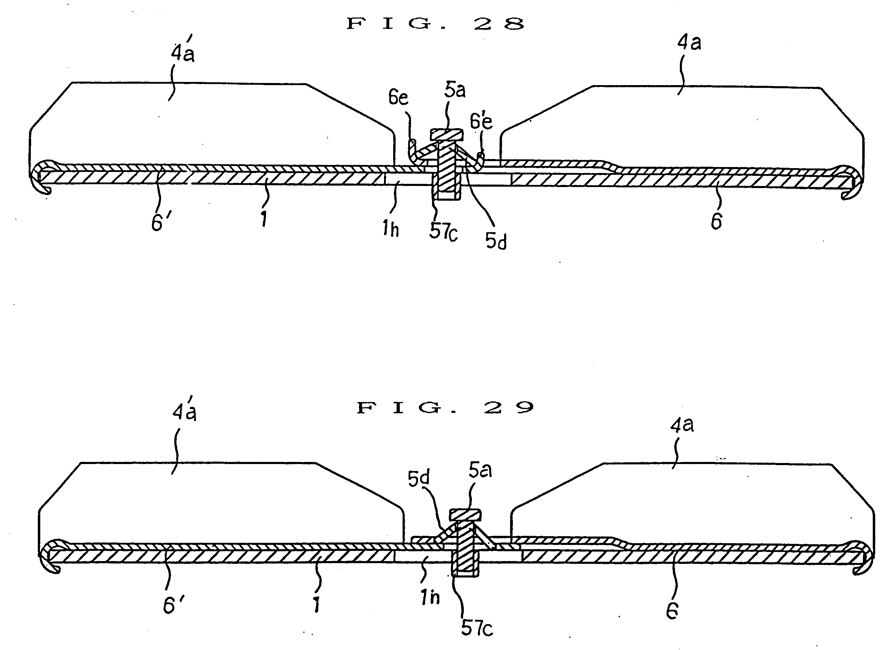

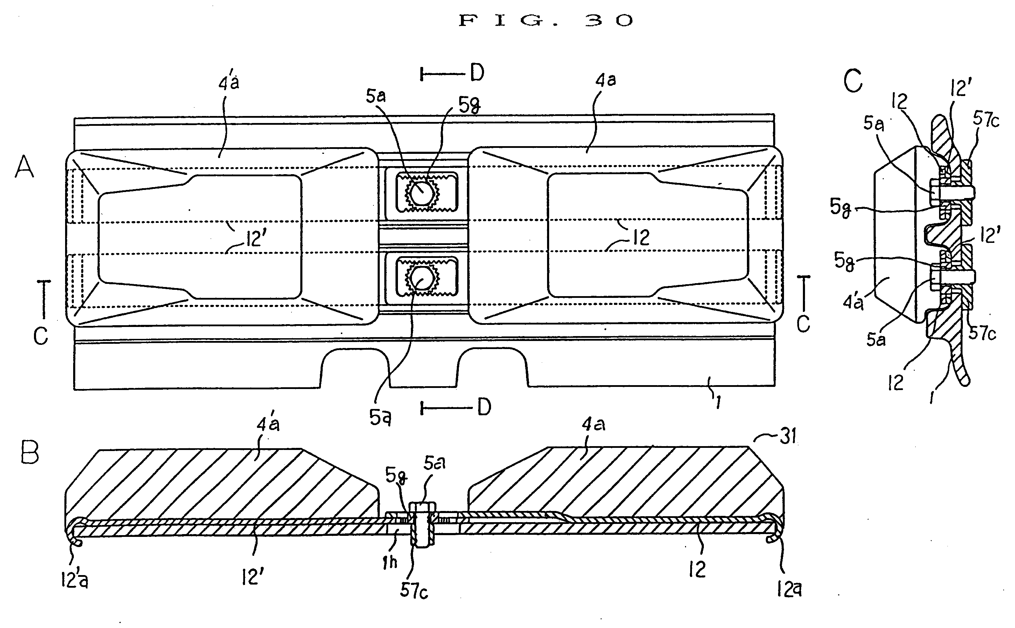

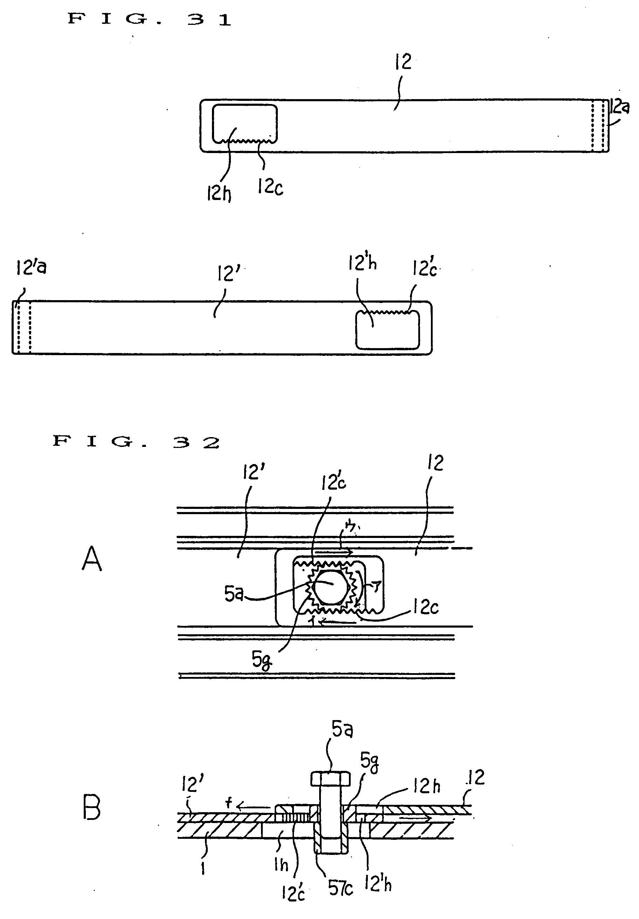

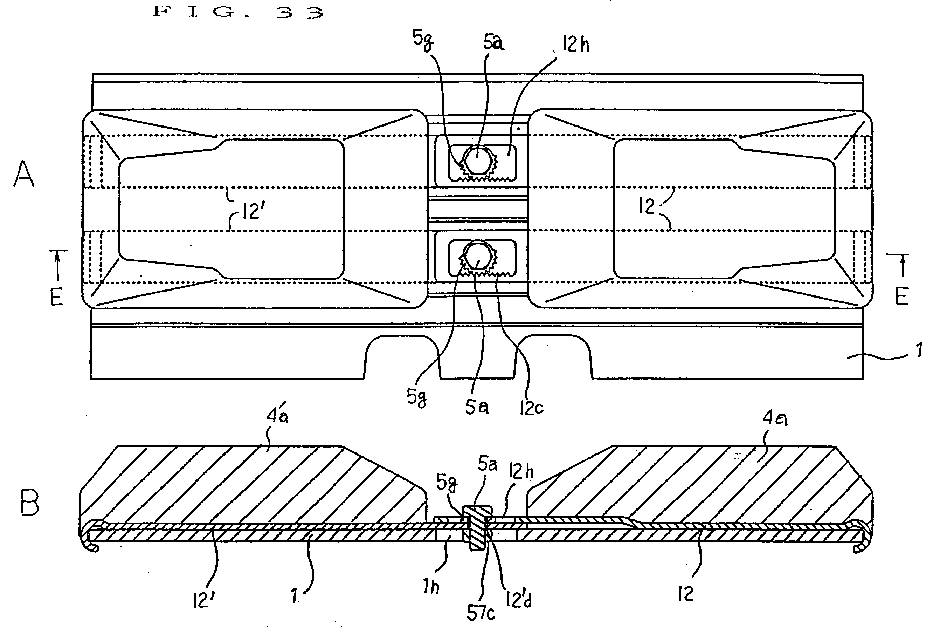

Fig. 25 shows the first embodiment of the rubber pad by the third invention with A being a plan view, B being a cross section along line A-A of A, and C being a cross section along line B-B of A. Fig. 26 is a plan view of the core metal of the first embodiment. Fig. 27 is a partially enlarged view which illustrates the method by which the rubber pad of the first embodiment is attached to a show plate. Fig. 28 is a cross section of a modified example of the first embodiment. Fig. 29 is a cross section of another modified example of the first embodiment. Fig. 30 shows the second embodiment of the rubber pad by this invention with A being a plan view, B being a cross section along line C-C of A, and C being a cross section along line D-D of A. Fig. 31 is a plan view of the core metal of the second embodiment. Fig. 32 is a partially enlarged view which illustrates the method by which the rubber pad of the second embodiment is attached to a show plate. Fig. 33 shows a modified example of the second embodiment with A being a plan view and B being a cross section along line E-E of A.

### PREFERRED EMBODIMENTS OF THE INVENTIONS

Embodiments of the first, second, and third inventions shall now be described in that order. Here, the same symbols are attached to the same parts in all drawings.

### a. Embodiments of the First Invention

Fig. 4 shows an embodiment of the rubber pad of this invention with A being a plan view, B being a cross section along line A-A of A, C being a side view, and D being a perspective view of the wedge type metal member. In this Figure, 1 is a shoe plate which is provided with a hole lh for ejection of mud at the center thereof and comprises an iron crawler by being linked in an endless manner by a truck link 2 attached to the non-ground-surface-contacting side. 3 is a rubber pad which is to be detachably attached to the ground-surface-contacting side of shoe plate 1 and is comprised of two pad members 4 and 4' which are separated in the lengthwise direction of shoe plate 1 and joined to each other by a bolt member 5. Pad members 4 and 4' are comprised of rubber lugs 4a and 4'a, each of which is formed of rubber material and has a length that is shorter than half the length of the shoe plate, and core metals 6 and 6', each of which has a length that is longer than rubber lugs 4 and 4' and is embedded in the non-ground-surface-contacting side of the rubber lug. One end portions of core metals 6 and 6' are semicircular hooks 6a and 6'a, which detachably latch onto the end portions of shoe plate 1, and the other end portions of core metals 6 and 6' are connecting parts 6b and 6'b, which are of shapes that overlap with each other when pad members 4 and 4' are joined together. Elongated bores 6h and 6'h are bored in said connecting parts 6b and 6'b. Bolt member 5 is comprised of a bolt 5a, a wedge type metal member 5b of a truncated pyramidal shape, and a nut 5c.

Figs. 5A, B, and C illustrate the method by which rubber pad 3 is attached to shoe plate 1 with A and B being cross sections at the same position as Fig. 4B, and C being a partially enlarged view of B. As shown in Fig. 5A, the connecting parts 6b and 6'b of pad members 4 and 4' are set opposite each other and then joined by bolt member 5. In this process, bolt 5a, which is passed through wedge type metal member 5b, is inserted into elongated bores 6h and 6'h of core metals 6 and 6' and a nut 5c is then attached to the end of the bolt in advance. Next, with pad members 4 and 4' being joined loosely by bolt member 5 as shown in Fig. 5B, hooks 6a and 6'a are brought closer to the end portions of shoe plate 1 and in this condition, the tip of wedge type metal member 5b is inserted into the location at which the elongated bores 6h and 6'h of the right and left core metals 6 and 6' overlap. By then tightening bolt 5a, wedge type metal member 5b is gradually moved into elongated bores 6h and 6'h and since wedge type metal member 5b thereby presses core metals 6 and 6' in the directions of the arrows in Fig. 5C, the right and left core metals 6 and 6'are gradually slid towards the central portion and the hooks 6a and 6'a at both ends latch onto the ends at both sides of shoe plate 1.

Figs. 6A and B show another embodiment of the rubber pad by this invention with A being a bottom view and B being a cross section along line B-B of A. In this embodiment, an elliptical washer 7 is added to bolt 5a, wedge type metal member 5b, and nut 5c to comprise the bolt member 5. This elliptical washer 7 is attached to the tip of bolt 5a, inserted through mud ejection hole lh of shoe plate 1, and then turned in the direction in which it crosses mud ejection hole lh at the truck link 2 side so that bolt member 5 is fixed to shoe plate 1. By tightening bolt 5a in this condition, the rubber pad is firmly attached to shoe plate 1 at three points, that is at both ends and at the central portion.

Figs. 7A, B, and C show the abovementioned washer with A being a plan view, B being a cross section, and C being a view from the truck link 2 side which illustrates the manner of use (the nut is omitted). Washer 7 has a two-step structure. The lower step of washer 7 has an elliptical shape that is substantially the same as the shape of mud ejection hole lh and the upper step has a circular shape, a part of which is formed as a corner-shaped stopper 7s. After washer 7 is inserted into mud ejection hole lh, washer 7 is turned in the direction perpendicular to mud ejection hole 1h as shown in Fig. 7C. Stopper 7s of washer 7 is thereby fitted to mud ejection hole lh so as to fix washer 7 and nut 5c. Although, mud ejection hole lh is a lateral hole that is long in the lengthwise direction of shoe plate 1 in the embodiment described above, the rubber pad can be attached in the manner just described and washer 7 will function in the same manner as the above even with a shoe plate with an elliptical vertical hole that is long in the width direction of the shoe plate.

Fig. 8 is a cross section at the same position as Fig. 4B which illustrates yet another embodiment of the rubber pad by this invention. Here, bolt member 5 uses bolt 5a and a stopping jig 8, comprised by a separate or integral combination of wedge type metal member 5, washer 7, and nut 5c, and parts of core metals 6 and 6' are formed as corrugated bellows 6c and 6'c. By inserting stopping jig 8 from the non-ground-surface-contacting side of shoe plate 1 and tightening bolt 5a, the right and left core metals 6 and 6' are slid toward the center by the actions of the wedge and hooks 6a and 6'a are fixed to the ends of the shoe plate. Since bellows 6c and 6'c are provided with an elastic force, they are elongated by the tightening of bolt 5a to thus prevent the concentration of force on hooks 6a and 6'a and enable accommodation of some differences in the size of the shoe plate.

Figs. 9, 10, and 11 show embodiments of the rubber pad to be attached to shoe plates of different shape. Fig. 9A is a plan view, B is a cross section along line C-C of A, and C is a perspective view of pad member 4. Shoe plate 11 of this example is comprised of three strips of iron lugs 11a1, 11a2, and 11a3 and a mud ejection hole 11h formed by notching iron lug 11a2. With the rubber pad to be attached to this type of shoe plate, core metals 12 of narrow width are respectively fit between iron lugs 11a1, 11a2, and 11a3 and each of these core metals is joined by bolt 5a and wedge type metal member 5b. Likewise, Fig. 10A is a plan view with a part being omitted, B is a cross section along line D-D of A, and C is a perspective view of pad member 4. These Figures illustrate a rubber pad to be attached to a shoe plate 13, comprised of three strips of metal lugs 13a1, 13a2, and 13a3 and mud ejection holes 13h1 and 13h2, which are respectively formed between the iron lugs. With this rubber pad, the core metal 14 is provided with a form that matches the profile of iron lugs 13a1, 13a2, and 13a3 and covers the entire surface of shoe plate 13. Fig. 11A is a plan view, B is a cross section along line E-E of A, C is a cross section along line F-F of A, and D is a perspective view of a pad member 4. With the rubber pad illustrated in these Figures, core metals 15 and 15', which are flat and parallel to shoe plate 13, are set on iron lugs 13a1, 13a2, and 13a3, and the ends of core metals 15 and 15' are respectively bent toward shoe plate 13 and attached to shoe plate 13 as hooks 15a and 15'a and connecting parts 15b and 15'b.

The rubber pads described above are not limited to those for which the truck link is welded to the shoe plate and the truck plate may be attached by means of bolting, etc. Fig. 12 is a cross section at the same position as Fig. 4B which illustrates a rubber pad attached to a shoe plate 1 to which truck links 2 are fixed by bolting. The portions of core metals 6 and 6' which correspond to the positions of bolts 2f of truck links 2 are formed as protruding parts 6t and 6't. Also, holes through which the heads of bolts 2f can be inserted may be opened at positions of the core metals which correspond to bolts 2f of truck links 2.

Figs. 13A and B show a modified example of the connecting parts of the core metals of the rubber pad by this invention with A being a plan view and B being a cross section along line G-G of A. As shown in these Figures, with the connecting part 16b of one of the core metals 16, a latching arm 16c, which is bent in an L-like shape, is formed at the end portion, an elongated bore 16h, to which is fit wedge type metal member 5b, is formed next to latching arm 16c, and a hollow part 16o is bored in the center in the width direction of the core metal. With connecting part 16'b of the other core metal 16', the end part is bent to form a claw part 16'e. In the process of attachment to shoe plate 1, latching arm 16c is first inserted from mud ejection hole lh and latched onto the non-ground-surface-contacting side of shoe plate 1. Bolt 5a is then tightened with claw part 16'e being loosely fit to hollow part 16o. Wedge type metal member 5b is thereby gradually inserted into elongated bores 16h and 16'h and core metals 16 and 16' are slid so that claw part 16'e fits in hollow part 16o and the rubber pad is attached more firmly to shoe plate 1. Since latching arm 16c is latched onto shoe plate 1, shoe plate 1 and core metal 16 are made integral and core metal 16 is made practically immovable. The rubber pad can thus be fixed to the shoe plate without the use of washer 7.

Figs. 14, 15, and 16 show still other examples of modification of the connecting parts of the core metals of the rubber pad by this invention. In Fig. 14, protruding parts 17m1, 17m2, 17'm1, and 17'm2 are formed at the respective sides in the core metal length direction of elongated bores 17h and 17'h of connecting parts 17b and 17'b, which correspond to connecting parts 6b and 6'b, and with the tightening of the bolt, a wedge type metal member is inserted into the elongated bores and the protruding parts 17m1 and 17m'2 respectively interfere with the protruding parts 17m2 and 17m'1 to prevent the shifting of the right and left metal cores. Likewise, with the connecting parts shown in Fig. 15, continuous, wave-like stepped grooves 18d and 18'd spaced by a suitable interval, are cut at both sides in the core metal length direction of elongated bores 18h and 18'h of the opposite faces of connecting parts 18b and 18'b to prevent the shifting of the shoe plate in the lengthwise direction. With the connecting parts shown in Fig. 16, a U-like protrusion 19p is protruded from the base of the rubber lug of core metal 19, which corresponds to one of the core metals 6, and the end portion of core metal 19', which corresponds to the other core metal 6', is inserted in a depressed part 19q formed between protrusion 19p and core metal 19. Protrusion 19p thus prevents the end portion of core metal 19' from projecting outwards when the rubber pad receives a force that tends to warp it. By providing the connecting parts with such modifications, the concentration of stress on bolt 5a can be prevented to thereby improve the durability of the bolt.

This invention is not limited to the above embodiments and for example, bolt 5a can be inserted from the non-ground-surface-contacting side of shoe plate 1 or nut 5c can be eliminated upon providing threads on washer 8.

### b. Bmbodiments of the Second Invention

Fig. 17 shows an embodiment of a rubber pad by this invention, with A being a plan view, B being a side view, C being a cross section along line A-A of A, and D being an enlarged view of the core metal connecting parts shown in C. In this embodiment, protruding arms 6h1 are protruded by a fixed length toward the shoe plate 1 side of elongated bore 6h of one of the core metals 6 (see Fig. 22).

Figs. 18 and 19 illustrate the bolt member 5 of this embodiment, with Fig. 18 being a perspective view of the wedge type metal member 5b and Figs.19A and B respectively being a plan view and a cross section of nut 57c of the present embodiment which is screwed onto bolt 5a. Wedge type metal member 5b has a bolt hole 5b1 bored from the upper face to the lower face of its truncated pyramidal form. Nut 57c has a T-like cross section and is comprised of a nut body 57c1 and a head 57c2. Nut body 57c1 has substantially the same elliptical shape as mud ejection hole lh and head 57c2 has corner-like stoppers 57s formed thereon.

Figs. 20A and B and 21A and B are cross sections at the same position as Fig. 17C and partially enlarged views of the core metal connecting parts which illustrate the method by which the abovementioned rubber pad 3 is attached to shoe plate 1. First as shown in Fig. 20A, the elongated bores 6h and 6'h of core metals 6 and 6', which are to form the respective connecting parts 6b and 6'b of pad members 4 and 4' are set opposite each other so that core metal 6' will be at the upper side and core metal 6 will be at the lower side. The right and left core metals 6 and 6' are then loosely joined by bolt member 5 and then pulled in the directions of arrows (a) to cause length L2 of rubber pad 3 to become greater than length L1 of shoe plate 1 so that the attachment can be performed readily. In this process, since head 57c2 of nut 57c is fitted between protruding arms 6h1 as shown in Fig. 20B, nut 57c will be fixed and be more readily inserted into mud ejection hole lh of shoe plate 1. When hooks 6a and 6'a are then drawn towards the ends of shoe plate 1 in the directions of arrows (b) as shown in Fig. 21, the elongated bores 6h and 6'h of the right and left core metals 6 and 6' overlap with each other, the tip of wedge type metal member 5b is automatically inserted in elongated bores 6h and 6'h, and nut head 57c2 is moved away from protruding arms 6h1. By adjusting the length of nut head 57c2 to be such that it will slightly overlap with protruding arms 6h1 in this process and by tightening bolt 5a so that nut body 57c will face sideways with respect to mud ejection hole lh as shown in Fig. 21B, stopper 57s becomes fitted into mud ejection hole lh and nut 57c becomes fixed. When bolt 5a is tightened further in this condition, wedge type metal member 5b gradually enters inside elongated bores 6h and 6'h and presses core metals 6 and 6' in the directions of arrows (c) so that the right and left core metals 6 and 6' slide toward the center and hooks 6a and 6'a at both ends become latched onto the side ends of shoe plate 1. Rubber pad 3 is thus attached more firmly at three locations, i.e. at both ends by the right and left core metal hooks 6a and 6'a and at the center by bolt member 5.

Fig. 22 is a perspective view of core metal 6 in the embodiment described above. Protruding arms 6h1 of a length L4, that is substantially equal to the shoe plate thickness L3, are formed at the non-ground-surface-contacting side of the periphery of elongated bore 6h1 (see Fig. 20B). Since protruding arms 6h1 will not protrude from mud ejection hole lh when rubber pad 3 is attached to shoe plate 1, they will not present a problem during travel, etc. of the crawler device.

Figs. 23A and B are plan views of the mud ejection hole part, and as shown in these Figures, there can be two types of mud ejection hole lh, one that is long in the vertical direction of the shoe plate and one that is long in the lateral direction of the shoe plate. The manner of attachment of protruding arms 6h1 will differ for these different types of mud ejection hole. Also, stopper 57s of nut head 57c2 fits inside mud ejection hole lh and does not turn when bolt 5a is tightened.

Fig. 24 is a perspective view of another embodiment of the wedge type metal member. Since a flange 5b2, which is larger than the elongated bore of the core metal, is formed on the upper face of the truncated pyramidal form, provided with a bolt hole 5b1 that passes through from the upper face to the lower face, wedge type member 5b will not fall inside elongated bores 6h and 6'h when pad members 4 and 4' are connected by bolt member 5. The attachment process is thus made easier.

The shoe plate of the embodiment described above may be one which is provided with two parallel mud ejection holes that sandwich the center of the shoe plate, and rubber pads of the above arrangement can be respectively attached by means of bolt members to each of the mud ejection holes of this shoe plate. Also, truck link 2 can be made integral to shoe plate 1 by welding or can be attached to shoe plate 1 by bolting, etc.

### c. Embodiments of the Third Invention

Fig. 25 illustrates the first embodiment of a rubber pad by this invention with A being a plan view, B being a cross section along line A-A of A, and C being a cross section along line B-B of A. In these Figures, 5d is a metal fastening member, which is formed by bending an iron plate and is provided with a bolt hole at the center thereof. This metal fastening member 5d connects the two pad members 4 and 4' in association with bolt 5a and nut 57c.

Fig. 26 is a plan view of the right and left core metals that are embedded. These core metals 6 and 6' are respectively provided at one end with semicircular hooks 6a and 6'a, which detachably engage with the end portions of shoe plate 1, and at the other end with elongated bores 6h and 6'h, which overlap with each other when pad members 4 and 4' are joined. Furthermore, the tip of core metal 6', which is set at the lower side (shoe plate side) when the elongated bores 6h and 6'h are overlapped, is bent to form a protrusion 6'e.

Figs. 27A to D are partially enlarged views which illustrate the method by which the abovementioned rubber pad 3 is attached to shoe plate 1. First, the elongated bores 6h and 6'h of right and left core metals 6 and 6' are set opposite each other so that core metal 6 will be at the upper side and core metal 6' will be at the lower side as shown in Fig. 27A. Then after the core metals are connected loosely by means of bolt 5a and nut 57c, hooks 6a and 6'a at the ends are latched onto the end sides of shoe plate 1. In this process, since right and left core metals 6 and 6' can be slid by the length of elongated bores 6h and 6'h though being joined at the center, they can be extended by a length that enables attachment to the shoe plate to be performed readily. When right and left pad members 4 and 4' are then drawn towards the center (in the directions of the arrows) and hooks 6a and 6'a are latched securely onto the sides of shoe plate 1 as shown in Fig. 27B, the elongated bores 6h and 6'h of right and left core metals 6 and 6' overlap with each other and metal fastening member 5d is inserted automatically into elongated bore 6h. When bolt 5a is tightened in this condition, metal fastening member 5d deflects as shown in Fig. 27C and presses left and right core metals 6 and 6' so that left and right core metals 6 and 6' slide toward the center and hooks 6a and 6'a at both ends become latched firmly onto both sides of shoe plate 1. The attachment is completed when metal fastening member 5d is fitted inside the elongated bore and becomes flat in shape as shown in Fig. 27D. In this condition, the rubber pad will be fixed firmly without any portions of the right and left connecting parts protruding unnecessarily. Metal fastening member 5d is suitably formed from a steel material with spring properties such as spring steel.

Figs. 28 and 29 are cross sections at the same position as Fig. 25 which show modified examples of core metals 6 and 6'. With the core metals shown in Fig. 28, a protrusion 6e is formed at the tip of the upper core metal 6 as well to cause metal fastening member 5d to be more difficult to detach. The core metals shown in Fig. 29 are not provided with protrusions at their tips, enabling them to be made with less machining and thus at lower cost.

Fig. 30 shows the second embodiment of the rubber pad by this invention with A being a plan view, B being a cross section along line C-C of A, and C being a cross section along line D-D of A. With rubber pad 31 of this embodiment, pad members 4 and 4', having core metals 12 and 12' embedded in the non-ground-contacting sides of rubber lugs 4a and 4'a, are fitted to shoe plate 1, provided with two soil and sand ejection holes lh at the center thereof, from the width direction ends of the shoe plate and are joined together at the central soil and sand ejection holes 1h by means of bolt 5a, nut 57c, and gear 5g.

Fig. 31 is a plan view of the embedded left and right core metals. These core metals 12 and 12' are respectively provided at one end portions thereof with semicircular hooks 6a and 6'a, which detachably latch onto the end portions of shoe plate 1, and at the other end portions thereof with elongated bores 12h and 12'h, which overlap with each other when pad members 4 and 4' are joined. Furthermore, stepped grooves 12c and 12c', which engage with gear 5g, are formed at one side portions of elongated bores 12h and 12'h.

Figs. 32A and B illustrate the method by which the abovementioned rubber pad 31 is attached to rubber pad 31 with A being an enlarged plan view of the bolt part and B being a cross section of the same. First, the elongated bores 12h and 12'h of right and left core metals 12 and 12' are set opposite each other so that core metal 12 will be at the upper side and core metal 12' will be at the lower side. After the core metals are joined loosely by means of bolt 5a, nut 57c, and a gear 5g of a size enabling insertion in elongated bores 12h and 12'h, hooks 12a and 12'a at the ends are latched onto the sides of shoe plate 1. When bolt 5a is then tightened, gear 5g turns in the direction of arrow (a). The stepped grooves 12c and 12'c of right and left core metals 12 and 12' are thereby engaged with gear 5g and right and left core metals 12 and 12' slide in the directions of arrows (b) and (c), respectively, so that hooks 12a and 12'a become latched firmly onto the ends of shoe plate 1.

Fig. 33 shows a modified example of rubber pad 31 with A being a plan view and B being a cross section along line E-E of A. In this example, only core metal 12, which becomes the upper core metal upon connection, is provided with an elongated bore 12h and stepped grooves 12c. Meanwhile, the lower core metal 12' is provided with a bolt hole 12'd. Thus only the upper core metal 12 engages with gear 5g in the connecting process, and whereas the upper core metal 12 slides towards the center, the lower core metal 12' remains immobile. Although teeth are formed only over a part of gear 5g in this example since the stepped grooves are formed only on one of the core metals, the teeth may also be formed over the entire circumference of the gear. Also, the lower core metal 12' can be provided with the stepped grooves instead and the upper core metal can be provided with the bolt hole.

Although in the embodiment described above, shoe plate 1 has two, parallel mud ejection holes that sandwich the center of the shoe plate and pad members 4 and 4' are connected at each mud ejection hole, the rubber pad of the above connection method can be attached to a shoe plate with one mud ejection hole at the center and the rubber pad of the above arrangement can be attached by means of a bolt member to the mud ejection hole of such a shoe plate. Also, truck link 2 can be made integral to shoe plate 1 by welding or can be attached to shoe plate 1 by bolting, etc.

## Claims

1. A rubber pad to be attached to the ground-surface-contacting face of an iron shoe plate having a hole for ejection of soil and sand at substantially the center thereof, said rubber pad comprising two pad members, comprising in turn rubber lugs, each formed of rubber material and having a length that is shorter than half the length of the shoe plate, and core metals, which are embedded in the non-ground-surface-contacting sides of the rubber lugs and each of which is provided at one end portion thereof with a hook engageable with the end portion of the shoe plate and at the other end portion thereof with a connecting part having an elongated bore, said two pad members being detachably fixed to the shoe plate by being set opposite each other at the connecting parts and joined by a bolt member upon insertion of a wedge type metal member in the elongated bores.

2. A rubber pad to be attached to the ground-surface-contacting face of an iron shoe plate having a hole for ejection of soil and sand at substantially the center thereof, said rubber pad comprising two pad members, comprising in turn rubber lugs, each formed of rubber material and having a length that is shorter than half the length of the shoe plate, and core metals, which are embedded in the non-ground-surface-contacting sides of the rubber lugs and each of which is provided at one end portion thereof with a hook engageable with the end portion of the shoe plate and at the other end portion thereof with a connecting part having an elongated bore, said two pad members being detachably fixed to the shoe plate by being set opposite each other at the connecting parts and joined by a bolt member, comprising a bolt, a nut, a wedge type metal member, and a washer insertable in the hole for soil and sand ejection, inserting the wedge type metal member in said elongated bores, and making use of the hole for soil and sand ejection by means of the bolt, nut, and washer.

3. A rubber pad to be attached to the ground-surface-contacting face of an iron shoe plate having a hole for ejection of soil and sand at substantially the center thereof, said rubber pad comprising a core metal, having a length that is substantially equal to the length of the shoe plate and provided at one end portion thereof with a hook engageable with the end portion of the shoe plate and at the other end portion thereof with an elongated bore, and another core metal, having the same dimensions as the abovementioned core metal and provided at one end portion and the other end portion thereof with a hook and an elongated bore as well as with protruding arms of a fixed length which protrude towards the non-ground-surface-contacting side of the periphery of the elongated bore, there being rubber adhered onto the ground-surface-contacting sides of the former and latter core metals, said former and latter core metals being set opposite each other at the locations of the elongated bores with the former core metal being set above the latter core metal and being connected by a bolt and nut upon insertion of a wedge type metal member from above the overlapped elongated bores, and the connecting parts being detachably attached to the shoe plate by making use of the hole for soil and sand ejection of the shoe plate.

4. A rubber pad as set forth in any of claims 1, 2, or 3, wherein the wedge type metal member has a truncated pyramidal shape and is provided with a bolt hole that passes through from the upper face to the lower face thereof.

5. A rubber pad as set forth in claim 4, wherein the wedge type metal member is provided with a flange.

6. A rubber pad as set forth in any of claims 1, 2, 3, 4, or 5, wherein a protrusion and stepped grooves are formed near the elongated bore of the core metal connecting part.

7. A rubber pad as set forth in claim 2 or 3, wherein the nut has a T-like cross section and is comprised of a nut body, which has an elliptical shape that is substantially the same as the mud ejection hole, and a circular head, which is smaller than the nut body, there being formed a corner-like stopper on said head.

8. A rubber pad as set forth in claim 3, wherein the length of protrusion of the protruding arms formed at the non-ground-surface-contacting side of the periphery of the elongated bore of the latter core metal is set to be substantially equal to the thickness of the shoe plate.

9. A rubber pad to be attached to the ground-surface-contacting face of an iron shoe plate having at least one hole for ejection of soil and sand at substantially the center thereof, said rubber pad comprising right and left core metals, each of which has a length that is substantially equal to the length of the shoe plate and is provided at one end portion thereof with a hook engageable with the end portion of the shoe plate and at the other end portion thereof with an elongated bore, there being rubber adhered onto the ground-surface-contacting sides of the core metals, said right and left core metals being set opposite each other at the locations of the elongated bores and connected by a bolt and nut upon insertion of a metal fastening member from above the overlapped elongated bores, and the connecting parts being detachably attached to the shoe plate by making use of the hole for soil and sand ejection of the shoe plate.

10. A rubber pad as set forth in any of claims 1, 2, 3, 4, 5, or 6, wherein the core metals are flat core metals, each being provided at one end portion thereof with a semicircular hook, which latches onto the end portion of the shoe plate, and at the other end portion thereof with a connecting part, in which is bored an elongated bore, and at least a part of the bodies of said core metals are formed as corrugated bellows.

11. A rubber pad as set forth in claim 10, wherein the metal fastening member is formed by bending an iron plate provided with a bolt hole at the center thereof and wherein the metal fastening member deflects to be flat in shape as the bolt is tightened.

12. A rubber pad as set forth in claim 10 or 11, wherein the portion at the tip of the elongated bore of at least one of either the left or right core metal is bent to form a protrusion.

13. A rubber pad as set forth in claim 10, wherein wave-like stepped grooves are formed at the elongated bore of at least one of either the left or right core metal and wherein a gear-like metal fastening member, which engages with the stepped grooves, is used.
